# EUROPEAN PATENT SPECIFICATION

(11) **EP 1 378 434 B1**
(45) Date of publication and mention of the grant of the patent: **17.05.2006**
(21) Application number: 03013254.2
(22) Date of filing: 12.06.2003
(51) Int. Cl.: B62M 7/02, B62K 11/04

(54) **Power unit support structure in motorcycle**
Motorlagerung in einem Motorrad
Support de moteur pour motocyclette

(30) Priority: 03.07.2002 JP 2002194410
(43) Date of publication of application: 07.01.2004
(73) Proprietor: HONDA GIKEN KOGYO KABUSHIKI KAISHA, Minato-ku, Tokyo (JP)
(72) Inventor: Kurohori, Seiichi c/o K.K. Honda Gijutsu Kenkyusho, Wako-shi, Saitama (JP); Wakoh, Hiroshi c/o K.K. Honda Gijutsu Kenkyusho, Wako-shi, Saitama (JP)
(74) Representative: Liska, Horst

(56) References cited:
- EP-A- 1 186 526
- GB-A- 598 754
- JP-A- 62 039 389
- US-A- 4 412 597
- US-A- 4 421 195
- US-A- 4 465 157
- US-A- 4 487 285
- US-A- 5 390 758
- US-A- 5 639 075
- PATENT ABSTRACTS OF JAPAN vol. 016, no. 026 (M-1202), 22 January 1992 (1992-01-22) & JP 03 239692 A (SUZUKI MOTOR CORP), 25 October 1991 (1991-10-25)
- PATENT ABSTRACTS OF JAPAN vol. 018, no. 259 (M-1607), 18 May 1994 (1994-05-18) & JP 06 040373 A (YAMAHA MOTOR CO LTD), 15 February 1994 (1994-02-15)
- PATENT ABSTRACTS OF JAPAN vol. 018, no. 220 (M-1595), 20 April 1994 (1994-04-20) & JP 06 016171 A (YAMAHA MOTOR CO LTD), 25 January 1994 (1994-01-25)

## Description

The present invention relates to a motorcycle in which a power unit comprising an engine and a transmission for transmitting the output of the engine to a rear wheel through speed change is vertically oscillatably borne on a vehicle body frame and an axle of the rear wheel is shaft-supported on a rear portion of the power unit, and particularly to an improvement in a power unit support structure.

A motorcycle according to the preamble of claim 1 is known from EP 0 937 636. Further motorcycles are known from JP 62 039389 A and EP-A-1 186 526.

Hitherto, a further motorcycle as above-mentioned has been already known as disclosed, for example, in Japanese Patent Publication No. Sho 62-20075 or the like. In the motorcycle, a front portion of the power unit is vertically oscillatably used on the vehicle body frame through a link, and a rear cushion is provided between a rear portion of the power unit and the vehicle body frame.

In the above-mentioned conventional system, however, the weight of the rear cushion itself is comparatively large, and the cost is high. In addition, the layout of fittings on the vehicle body frame side must be designed taking into account the expansion range of the rear cushion and the range of oscillation of the power unit by interaction of the turning of the link, so that this system cannot be said to be excellent in space efficiency, and the degree of freedom in designing inclusive of design planning is limited.

The present invention has been made in consideration of the above circumstances. Accordingly, it is an object of the present invention to provide a power unit support structure in a motorcycle with which it is possible to realize reductions in size, weight and cost while contriving an increase in space efficiency and an increase in the degree of freedom in designing.

This object is reached by a motorcycle according to claim 1. In a motorcycle which comprises a power unit comprising an engine and a transmission for transmitting the output of the engine to a rear wheel through speed change, the power unit being borne on a vehicle body frame so as to be vertically oscillatable, and an axle of the rear wheel being shaft-supported on a rear portion of the power unit, a vibration-proofing link for connecting a front portion of the power unit to the vehicle body frame in a vertically oscillatable condition is provided with an elastic member for restricting the vertical oscillation range of the power unit by making springy contact with a contacted body provided in the vehicle body frame, and a non-expandable support member for connecting the power unit and the vehicle body frame to each other so as to enable vertical oscillation of the power unit is provided between an upper portion of the power unit and the vehicle body frame.

Since the power unit is supported on the vehicle body frame through the non-expandable support member in place of the conventional rear cushion, it is possible to achieve reductions in size, weight and cost. In addition, since the vertical oscillation range of the power unit is determined by the deflection amount of the elastic member making springy contact with the contacted body on the vehicle body frame side, it is possible to restrict the vertical oscillation range of the power unit to within a comparatively narrow range, thereby to enhance space efficiency, to facilitate designing of the layout of fittings on the vehicle body frame side and on the power unit side, and to increase the degree of freedom in designing inclusive of design planning.

The invention as set forth in claim 2 is characterized in that, in addition to the constitution of the invention as set forth in claim 1, the support member is formed to be hollow. With this constitution, it is possible to contrive further reductions in weight and cost.

The invention as set forth in claim 3 is characterized in that, in addition to the constitution of the invention as set forth in any of claims 1 to 2, the vehicle body frame comprises a main frame provided at its front end with a head pipe for steerably supporting a front fork and a steering handle, a seat post integrally provided in connection with a rear portion of the main frame so as to support a seat for seating the driver thereon, a support stay formed in a roughly U shape opened to the front side so as to support a fuel tank and having both ends thereof fixed to the seat post, and a reinforcing member extending rearwardly upwards from the seat post so as to respectively connect both left and right sides of the support stay and the seat post to each other, and one end of the support member is connected to a bracket provided between the support stay and the reinforcing member. With this constitution, it is possible to firmly support the power unit with a simple structure.

Furthermore, the invention as set forth in claim 4 is characterized in that, in addition to the constitution of the invention as set forth in any of claims 1 to 2, the vehicle body frame comprises a main frame provided at its front end with a head pipe for steerably supporting a front fork and a steering handle, and a seat post integrally provided in connection with a rear portion of the main frame so as to support a seat for seating the driver thereon, and the support member is provided between an upper portion of the power unit and the seat post. With this constitution, it is possible to firmly support the power unit with a simple structure.

Now, a mode for carrying out the present invention will be described below based on embodiments of the present invention shown in the accompanying drawings, in which:
Fig. 1 is a side view of a motorcycle according to a first embodiment.
Fig. 2 is a cross-sectional plan view of a rear portion of the motorcycle taken along line 2-2 of Fig. 1.
Fig. 3 is an enlarged side view of a rear portion of the motorcycle.
Fig. 4 is a sectional view taken along line 4-4 of Fig. 3.
Fig. 5 is an enlarged view of a front portion of Fig. 4.
Fig. 6 is an enlarged broken side view of a front portion of an engine main body and is a sectional view taken along line 6-6 of Fig. 7.
Fig. 7 is a sectional view taken along line 7-7 of Fig. 6.
Fig. 8 is a sectional view taken along line 8-8 of Fig. 7.
Fig. 9 is an enlarged view of an essential part of Fig. 5.
Fig. 10 is an enlarged view of a rear portion of Fig. 4.
Fig. 11 is an enlarged sectional view taken along line 11-11 of Fig. 3.
Fig. 12 is a sectional view taken along line 12-12 of Fig. 3.
Fig. 13 is a sectional view, corresponding to Fig. 12, of a second embodiment.
Fig. 14 is a sectional view, corresponding to Fig. 12, of a third embodiment.

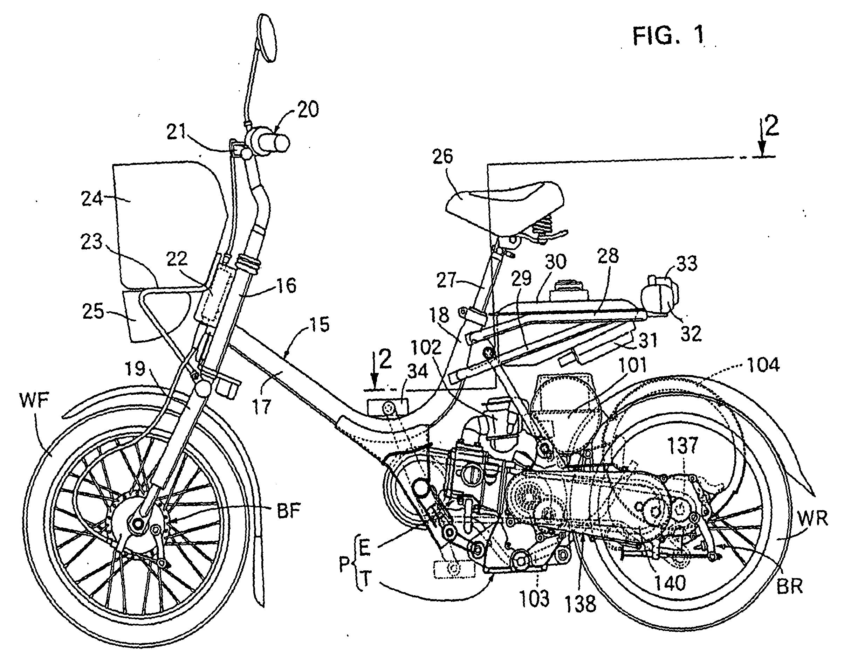

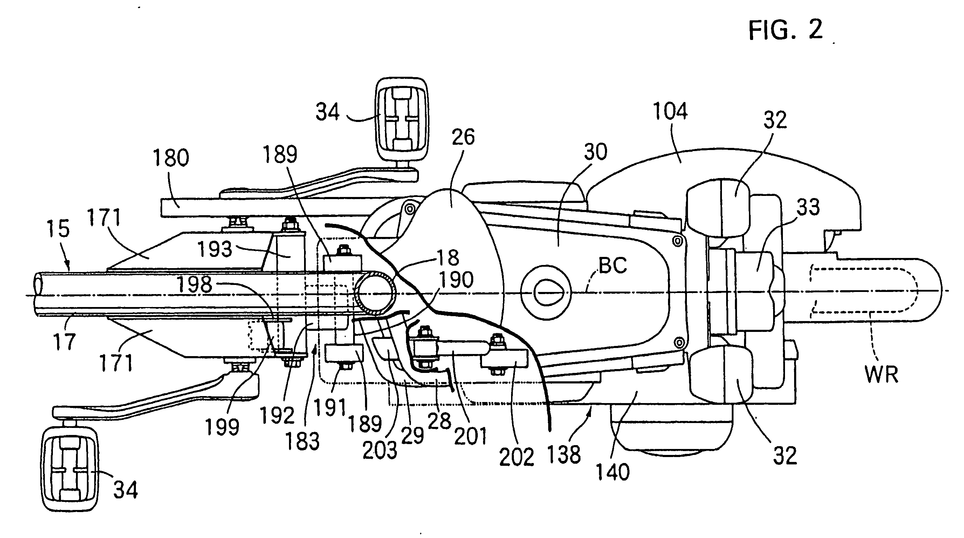

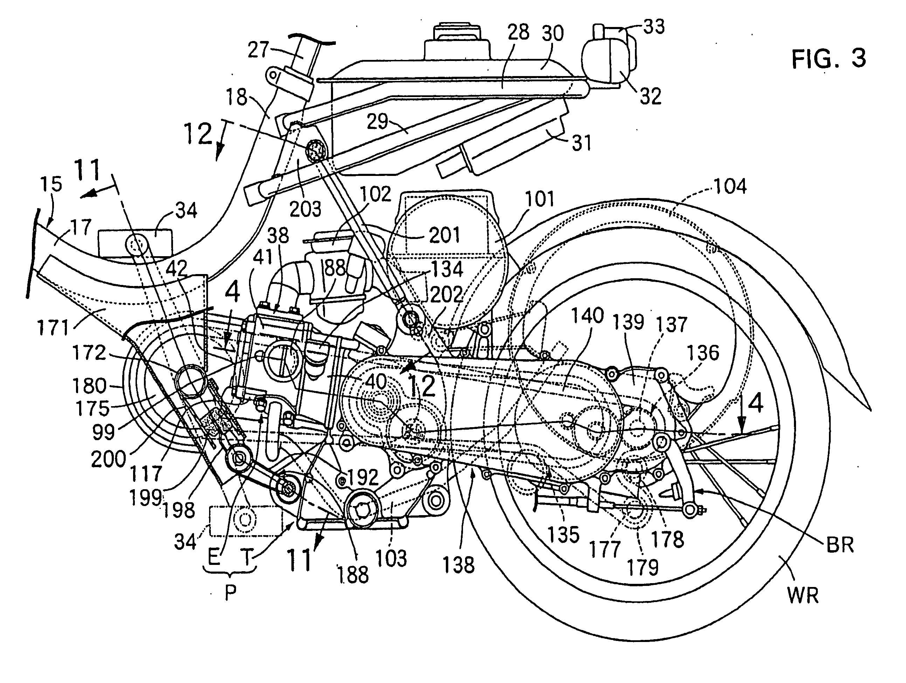

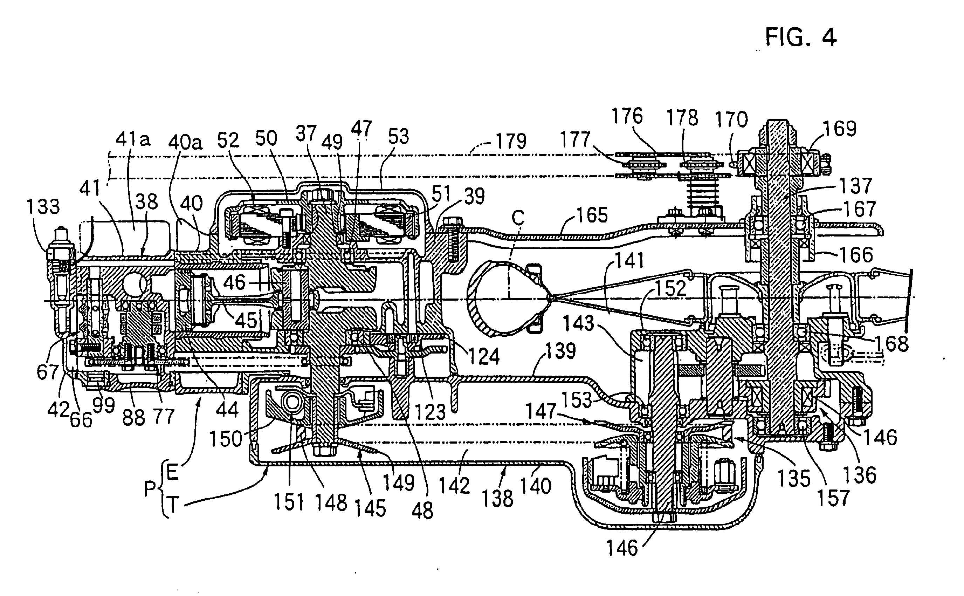

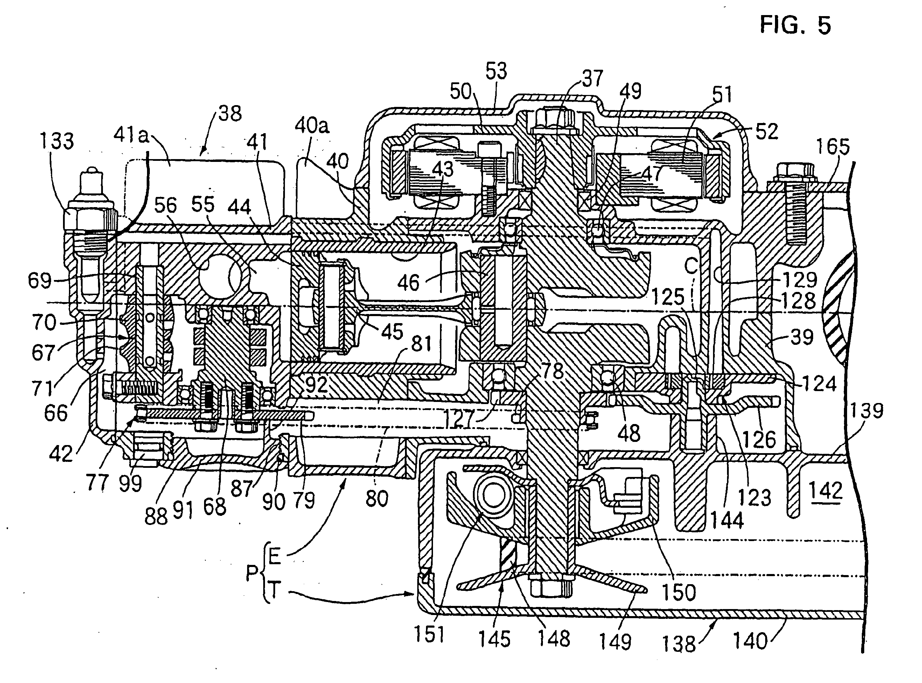

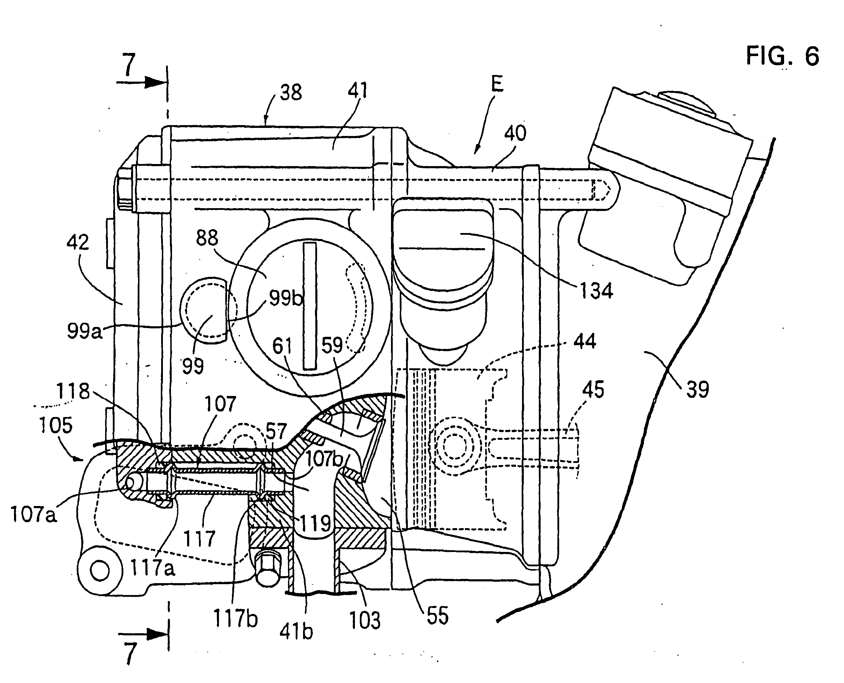

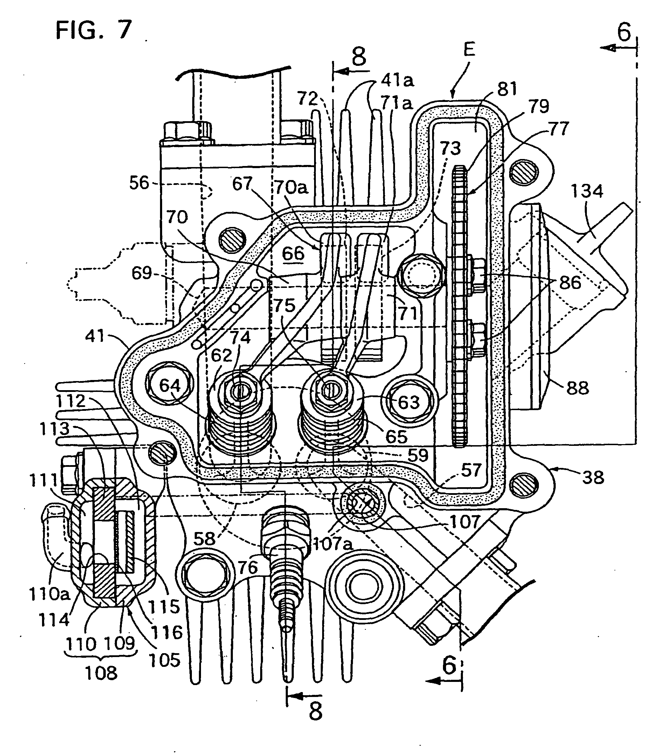

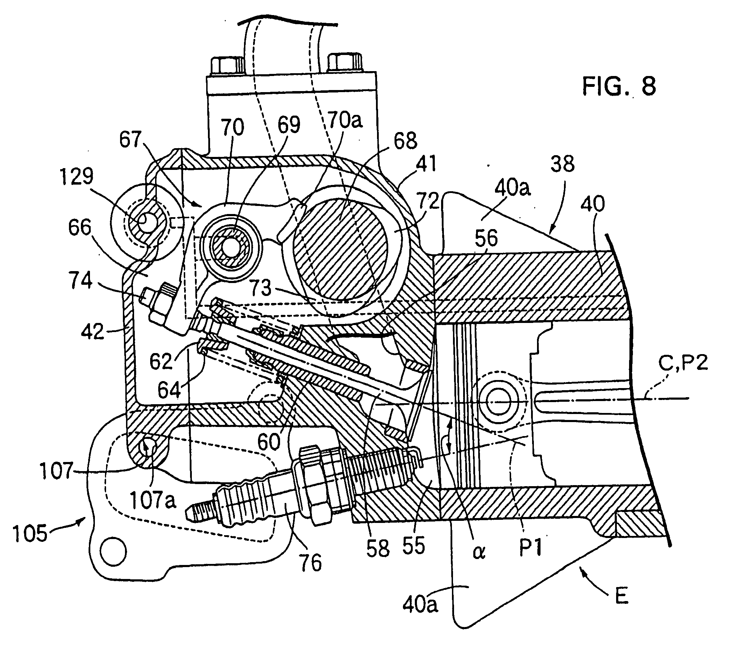

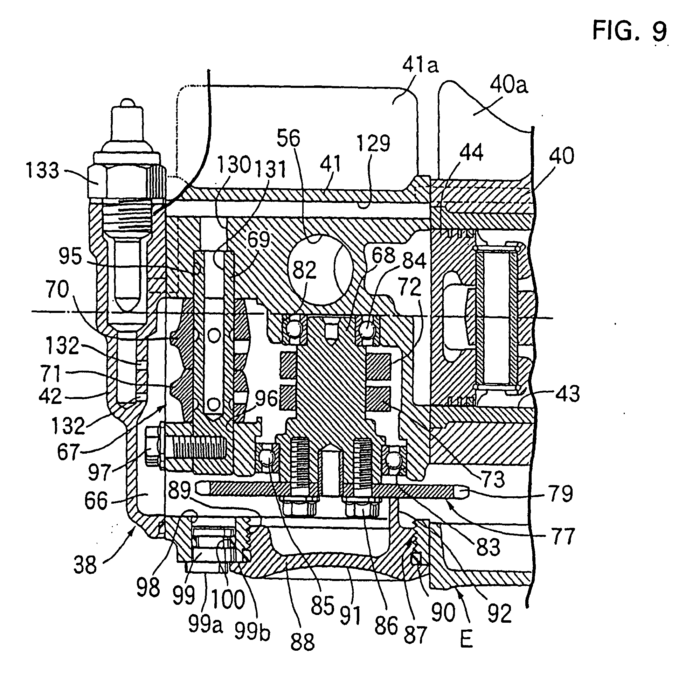

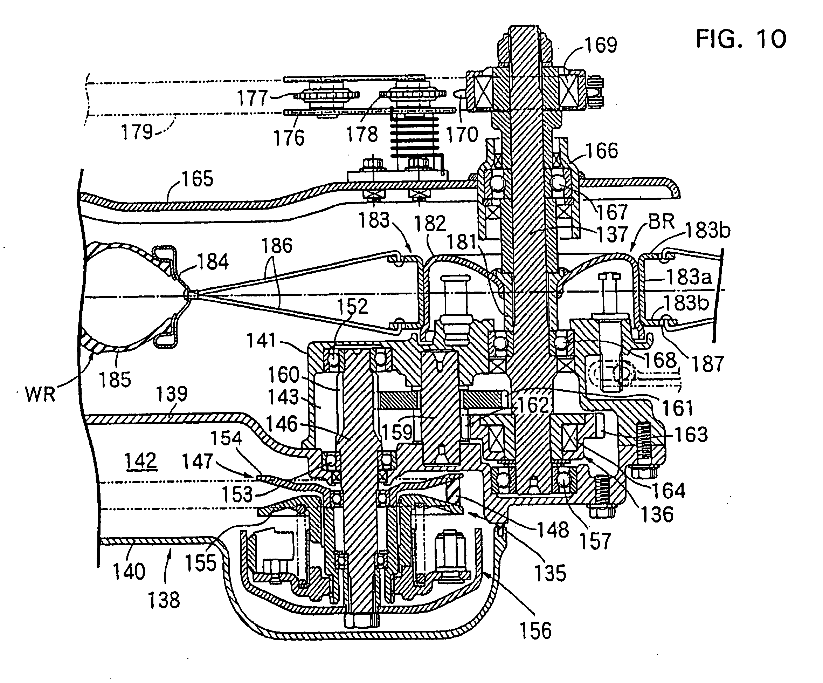

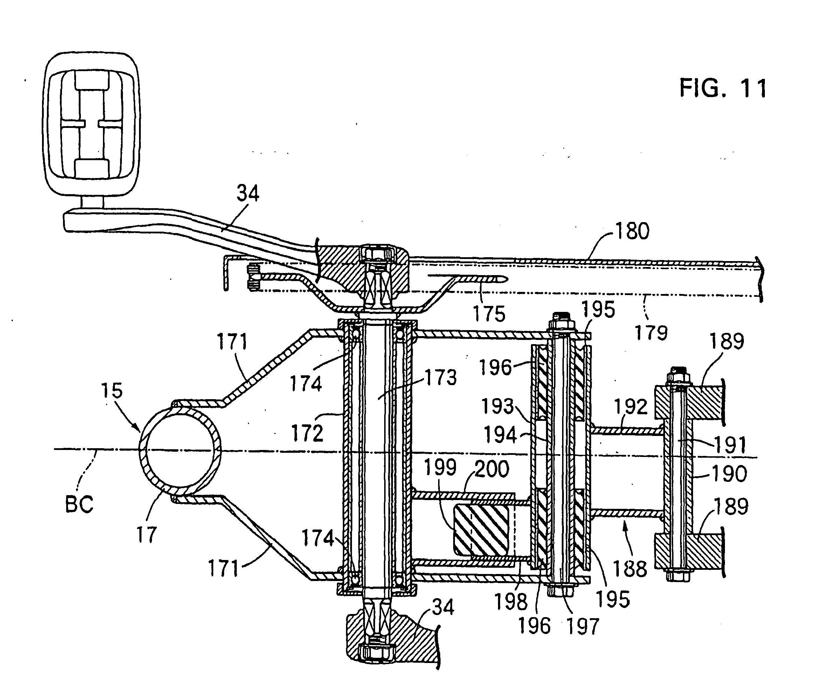

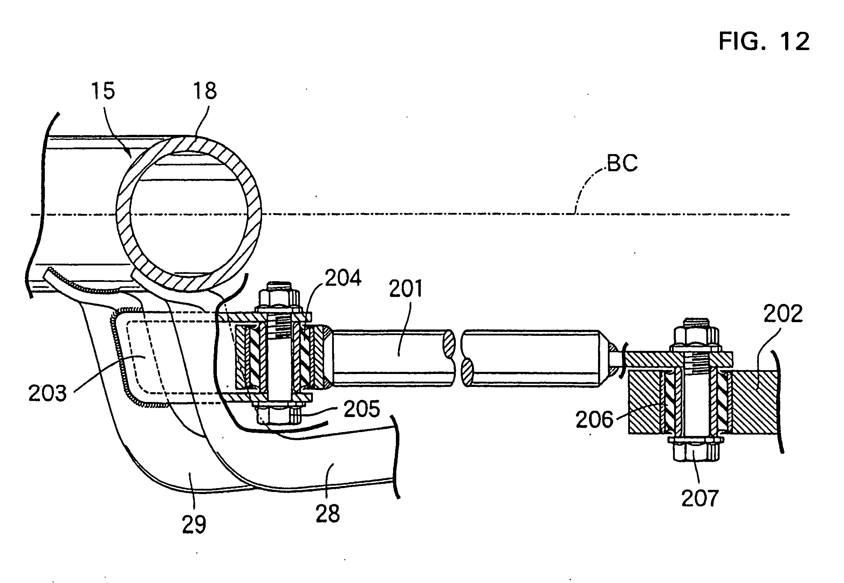

Figs. 1 to 12 show a first embodiment of the present invention, in which Fig. 1 is a side view of a motorcycle, Fig. 2 is a cross-sectional plan view of a rear portion of the motorcycle taken along line 2-2 of Fig. 1, Fig. 3 is an enlarged side view of a rear portion of the motorcycle, Fig. 4 is a sectional view taken along line 4-4 of Fig. 3, Fig. 5 is an enlarged view of a front portion of Fig. 4, Fig. 6 is an enlarged broken side view of a front portion of an engine main body and is a sectional view taken along line 6-6 of Fig, 7, Fig. 7 is a sectional view taken along line 7-7 of Fig. 6, Fig. 8 is a sectional view taken along line 8-8 of Fig. 7, Fig. 9 is an enlarged view of an essential part of Fig. 5, Fig. 10 is an enlarged view of a rear portion of Fig. 4, Fig. 11 is an enlarged sectional view taken along line 11-11 of Fig. 3, and Fig. 12 is a sectional view taken along line 12-12 of Fig. 3.

First, in Fig. 1, a vehicle body frame 15 of a pedaled motorcycle comprises a main frame 17 provided at its front end with a head pipe 16 and sloped rearwardly downwards, a seat post 18 integrally provided in connection with a rear portion of the main frame 17 and extending upwards, a support stay 28 formed in a roughly U shape opened to the front side and having both ends thereof fixed to the seat post 18, and reinforcing members 29 · · · extending rearwardly upwards from the seat post 18 for respectively connecting both left and right sides of the support stays 28 · · · and the seat post 18 to each other.

A front fork 19 is steerably borne on the head pipe 16, a front wheel WF is shaft-supported on the lower ends of the front fork 19, and a bar-shaped steering handle 20 is provided at the upper end of the front fork 19. Namely, the front fork 19 and the steering handle 20 are steerably borne by the head pipe 16.

Brake levers 21 · · · are respectively operatably disposed at both left and right end portions of the steering handle 20, and operating forces on the brake levers 21 · · · are inputted to an equalizer 22 disposed on the front side of the head pipe 16 and supported by the head pipe 16. The equalizer 22 is so constituted that when either one of the left and right brake levers 21 · · · is operated, a brake operating force is transmitted to both of a front wheel brake BF mounted for the front wheel WF and a rear wheel brake BR mounted for the rear wheel WR. In addition, a basket 24 disposed on the front side of the steering handle 20 and the head pipe 16 and a head lamp 25 disposed on the lower side of the basket 24 are supported by a basket support member 23 provided between an upper portion of the front fork 19 and the steering handle 20.

Referring to Figs. 2 and 3 as well, a seat support pipe 27 provided at its upper end with a saddle form seat 26 for seating the driver thereon is inserted into the seat post 18 from the upper side, and the seat support post 27 is fixed to the seat post 18 so that the vertical position thereof can be adjusted.

A fuel tank 30 disposed on the skewly rear lower side of the seat 26 is supported on the support stay 28, and an electronic control unit 31 for controlling the operation of an engine E mounted on the vehicle body frame 15 is attached to the lower surface of the fuel tank 30. In addition, a left-right pair of rear winkers 32, 32 and a rear lamp 33 disposed between the rear winkers 32, 32 are attached to a rear portion of the support stay 28.

A power unit P comprising the 4-cycle SOHC type engine E and a transmission T for transmitting the output of the engine E to the rear wheel WR through speed change is vertically oscillatably borne on a rear portion of the vehicle body frame 15, and an axle of the rear wheel WR is shaft-supported on a rear portion of the power unit P. In addition, the power generated when the rider on the seat 26 steps down a left-right pair of crank pedals 34 · · · can also be transmitted to the rear wheel WR.

In Fig. 4, the engine E is a single-cylinder air-cooled type engine having a crankshaft 37 extending in the left-right direction of the vehicle body frame 15. An engine main body 38 of the engine E comprises a crankcase 39 for rotatably bearing the crankshaft 37, a cylinder block 40 connected to the crankcase 39 while having a cylinder axis C extending slightly forwardly upwards from the crankcase 39, a cylinder head 41 connected to the cylinder block 40, and a head cover 42 connected to the cylinder head 41 on the side opposite to the cylinder block 40, and a plurality of cooling fins 40a · · · and a plurality of cooling fins 41a · · · are projectingly provided on the outside surfaces of the cylinder block 40 and the cylinder head 41, respectively.

A piston 44 slidably fitted in a cylinder bore 43 provided in the cylinder block 40 is connected to the crankshaft 37 through a connecting rod 45 and a crank pin 46. The crankshaft 37 is rotatably borne on the crankcase 39 through a pair of ball bearings 47 and 48, and an annular seal member 49 is interposed between the crankshaft 37 and the crankcase 39 on the outer side of the ball bearing 47 on one side.

Moreover, one end portion of the crankshaft 37 is projected from the crankcase 39 on the right side as viewed from a person directed in the running direction of the motorcycle, and an AC generator 52 is constituted of a rotor 50 fixed to the one end portion of the crankshaft 37 and a stator 51 contained in the rotor 50. The AC generator 52 is covered with a right engine cover 53 connected to the crankcase 39 and the cylinder block 40, and the stator 51 is fixed to the crankcase 39.

Referring to Figs. 5 to 8 as well, the cylinder head 41 are provided with an intake port 56 and an exhaust port 57 which can be communicated to a combustion chamber 55 formed between the cylinder block 40 and the cylinder head 41, with a top portion of the piston 44 fronting thereon, and an intake valve 58 and an exhaust valve 59 for opening and closing the intake port 56 and the exhaust port 57 are disposed at the cylinder head 41.

The intake valve 58 and the exhaust valve 59 perform rectilinear opening and closing operations while being guided respectively by guide tubes 60 and 61 provided at the cylinder head 41, valve springs 64 and 65 are provided respectively between retainers 62 and 63 provided at end portions of the intake valve 58 and the exhaust valve 59 projecting from the guide tubes 60 and 61 and the cylinder head 41, and the intake valve 58 and the exhaust valve 59 are spring-biased in the closing directions by the valve springs 64 and 65, respectively.

Moreover, the guide tubes 60 and 61 are provided at the cylinder head 41 while having their axes parallel to each other and set forwardly upwards so that a plane P1 containing the axes of the guide tubes 60 and 61 in common intersects at an acute angle with a plane P2 containing the axis of the crankshaft 37 and the cylinder axis C; as a result, the intake valve 58 and the exhaust valve 59 are disposed at the cylinder head 41 so that they are operated in the opening and closing operation directions which are parallel to each other.

A valve-operating chamber 66 is formed between the cylinder head 41 and the head cover 42, and a valve-operating device 67 for driving the intake valve 58 and the exhaust valve 59, which are spring-biased in the valve-closing directions respectively, to open and close is contained in the valve-operating chamber 66.

The valve-operating device 67 comprises a cam shaft 68 having an axis parallel to the crankshaft 37 and rotatably borne on the cylinder head 41, a rocker shaft 69 having an axis parallel to the cam shaft 68 and fixedly supported on the cylinder head 41, an intake-side rocker arm 70 oscillatably borne on the rocker shaft 69 and interposed between the cam shaft 68 and the intake valve 58, and an exhaust-side rocker arm 71 oscillatably borne on the rocker shaft 69 together with the intake-side rocker arm 70 and interposed between the cam shaft 68 and the exhaust valve 59.

The cam shaft 68 is provided with an intake-side cam 72 and an exhaust-side cam 73, and a tappet screw 74 making contact with the intake valve 58 is screw-engaged to the other end portion of the intake-side rocker arm 70 provided at its one end with a cam slipper 70a making sliding contact with the intake-side cam 72, with the advanced/retracted position of the tappet screw 74 being adjustable. Similarly, a tappet screw 75 making contact with an end portion of the exhaust valve 59 is screw-engaged to the other end portion of the exhaust-side rocker arm 71 provided at its one end with a cam slipper 71a making sliding contact with the exhaust-side cam 73, with the advanced/retracted position of the tappet screw 75 being adjustable.

Meanwhile, the cam shaft 68 is disposed closer to the combustion chamber 55 as compared with the points of conjunction or connection of the intake-side and exhaust-side rocker arms 70 and 71 with the intake and exhaust valves 58 and 59, i.e., the points of contact of the tappet screws 74 and 75 with the intake and exhaust valves 58 and 59; in this embodiment, the cam shaft 68 is disposed on the upper side of the intake and exhaust valves 58 and 59.

Moreover, the intake port 56 is provided in the cylinder head 41 while being disposed at a position away from one end in the axial direction of the cam shaft 68 so that at least a portion (in this embodiment, a portion) of the cam shaft 68 is overlapped on a projection (see Fig. 8) onto a plane orthogonal to the axis of the cam shaft 68 and that it intersects with the rocker shaft 69 on a projection (see Fig. 7) onto a plane orthogonal to the cylinder axis C.

The opening ends of the intake port 56 and the exhaust port 57 into the combustion chamber 55 are disposed on a straight line parallel to the axes of the cam shaft 68 and the rocker shaft 69, as clearly shown in Fig. 7; the outer end of the intake port 56 is opened in an upper side wall of the cylinder head 41, and the outer end of the exhaust port 57 is opened in a lower side wall of the cylinder head 41.

In addition, a spark plug 76 having its axis at an acute angle α to the plane P1 containing the axes of the intake and exhaust valves 58 and 59 in common is attached to the cylinder head 41 so as to front on the combustion chamber 55.

A timing transmission mechanism 77 for transmitting the rotational power of the crankshaft 37 to the cam shaft 68 at a speed reduction ratio of 1/2 is provided between the cam shaft 68 and the crankshaft 37. The timing transmission mechanism 77 comprises a driving sprocket 78 fixed to the crankshaft 37 at a position on the outer side of the ball bearing 48, a driven sprocket 79 fixed to the other end portion of the cam shaft 68, and an endless cam chain 80 wrapped around the driving and driven sprockets 78 and 79. The engine main body 38, at a portion ranging from the crankcase 39 through the cylinder block 40 and the cylinder head 41 to the head cover 42, is provided with a cam chain chamber 81 for running of the cam chain 80.

In Fig. 9, the cylinder head 41 is provided with a circular first support recessed portion 82 for containing one end portion of the cam shaft 68, and a first support hole 83 for passing the cam shaft 68 therethrough, in a coaxial form. The first support hole 83 is formed to be large in diameter to such an extent that the intake-side cam 72 and the exhaust-side cam 73 provided on the cam shaft 68 can pass therethrough. Moreover, a ball bearing 84 is interposed between the inside surface of the first support recessed portion 82 and the outside surface of one end portion of the cam shaft 68, and a ball bearing 85 is interposed between the inside surface of the first support hole 83 and the outside surface on the other end side of the cam shaft 68. The driven sprocket 79 is coaxially fastened to the other end of the cam shaft 68 on the outer side of the ball bearing 85, with a plurality of bolts 86 · · · .

One side wall of the cylinder head 41, in this embodiment the left side wall of the cylinder head 41 as viewed from a person directed to the front side in the running direction of the motorcycle, is provided with a first assembly opening portion 87 for making it possible to assemble the cam shaft 68 onto the cylinder head 41 from the left side wall side and to attach the driven sprocket 79 to the cam shaft 68, and the first assembly opening portion 87 has a diameter greater than that of the first support hole 83. The first assembly opening portion 87 is closed with a first cover member 88, the first cover member 88 is fixed to the cylinder head 41 through screw engagement to a female screw 89 provided in the first assembly opening portion 87, and an annular seal member 90 is clamped between the outer end of the first assembly opening portion 87 and the first cover member 88.

Moreover, the outside surface of the first cover member 88 is provided with an engaging groove 91 along a diameter line, for engaging a jig at the time of rotating the first cover member 88. In addition, the inside surface of the first cover member 88 is provided with a restriction projected portion 92 which is projected to the side of the driven sprocket 79. By sliding contact of the driven sprocket 79 with the restriction projected portion 92, the cam shaft 68 is inhibited from escaping to the side of the first assembly opening portion 87.

The cylinder head 41 is provided with a circular second support recessed portion 95 for supporting one end portion of the rocker shaft 69 by fitting therein, and a second support hole 96 for supporting the other end portion of the rocker shaft 69 by passing therethrough, in a coaxial form. The rocker shaft 69 is fixedly supported on the cylinder head 41, by screw-engaging a bolt 97 to the cylinder head 41 and the rocker shaft 69 at a portion corresponding to the second support hole 96.

The left side wall of the cylinder head 41 is provided with a second assembly opening portion 98 for making it possible to assemble the rocker shaft 69 onto the cylinder head 41 from the left side wall side, and the second assembly opening portion 98 has a diameter substantially equal to that of the second support hole 96. The second assembly opening portion 98 is closed with a second cover member 99, and the second cover member 99 is gas-tightly fitted into the second assembly opening portion 98 so as to be inhibited from moving inwards in the axial direction. Namely, the second cover member 99 which is provided at its outer end with a flange portion 99a to be engaged with the circumferential edge of the outer end of the second assembly opening portion 98 is fitted in the second assembly opening portion 98, with an annular seal member 100 attached to the outer circumference thereof.

Moreover, the flange portion 99a is provided with a cutout 99b so that a portion of the first cover member 88 is engaged with the second cover member 99 from the outer side. After the second cover member 99 is fitted into the second assembly opening portion 98, the first cover member 88 is screwed into the first assembly opening portion 87, whereby the first cover member 88 is fixed to the cylinder head 41 and, simultaneously, the second cover member 99 is fixed to the cylinder head 41.

An air cleaner 101 disposed on the upper side of the power unit P and supported by the power unit P is connected to the intake port 56 opened in an upper side surface of the cylinder head 41, through a carburetor 102. In addition, an exhaust muffler 104 disposed on the right side of the rear wheel WR is connected to the rear end of an exhaust pipe 103 which is connected to the exhaust port 57 opened in a lower side surface of the cylinder head 41 and is extended rearwards.

Meanwhile, secondary air for cleaning the exhaust gas is supplied to the exhaust port 57. A reed valve 105 is provided at a right front portion of the head cover 42 of the engine main body 38, the upstream side of the reed valve 105 is connected to the air cleaner 101 through a hose (not shown), and the downstream side of the reed valve 105 is connected to the exhaust port 57 through a secondary air supply passage 107.

A valve housing 108 of the reed valve 105 is comprised of a housing main portion 109 provided as one body with the head cover 42, and a cover 110 fastened to the housing main portion 109. A valve seat plate 113 for partitioning the interior of the valve housing 108 into an upstream chamber 111 on the side of the cover 110 and a downstream chamber 112 on the side of the housing main portion 109 is clamped between the housing main portion 109 and the cover 110, and the valve seat plate 113 is provided with a valve hole 114 for communicating the upstream chamber 111 and the downstream chamber 112 to each other.

A stopper plate 115 spaced from the valve seat plate 113 at a portion fronting on the valve hole 114 and one end of a reed 116 capable of making contact with the valve seat plate 113 so as to close the valve hole 114 are co-fastened to the surface of the valve seat plate 113 which fronts on the side of the downstream chamber 112.

The downstream end of the hose (not shown) is connected to a connection pipe portion 110a provided as one body with the cover 110, and the upstream end of the hose is connected to the air cleaner 101.

The secondary air supply passage 107 is comprised of a first passage portion 107a provided in the head cover 42 in communication with the downstream chamber 112, and a second passage portion 107b provided in the cylinder head 41 in communication with the exhaust port 57, which are connected to each other through a secondary air supply pipe 117 having its outside surface exposed to the atmospheric air. Namely, a part of the secondary air supply passage 107 is composed of the secondary air supply pipe 117.

A projected portion 41b projected downwards is formed at a part of the cylinder head 41 at a portion for forming the exhaust port 57, and a lower portion of the head cover 42 is projected downwards from a side surface of the cylinder head 41 on the side of the head cover 42, in the manner of corresponding to the projected portion 41b of the cylinder head 41. A first passage portion 107a having its upstream end communicated with the downstream chamber of the reed valve 105 is formed in the head cover 42 so as to have its downstream end opened toward the projected portion 41b of the cylinder head 41, and a second passage portion 107b is formed at the projected portion 41b of the cylinder head 41 so as to have its upstream end opened oppositely to a downstream-side opening end of the first passage portion 107a and have its downstream end opened into the exhaust port 57.

The secondary air supply pipe 117 is clamped between the projected portion 41b of the cylinder head 41 and a lower portion of the head cover 42, and both ends of the secondary air supply pipe 117 are fitted in a downstream end opening portion of the first passage portion 107a and an upstream end opening portion of the second passage portion 107b, respectively.

O-rings 118 and 119 are interposed between the outside surfaces of both ends of the secondary air supply pipe 117 and the head cover 42 and the cylinder head 41 of the engine main body 38, i.e., the inside surface of the downstream end opening portion of the first passage portion 107a and the inside surface of the upstream end opening portion of the second passage portion 107b, respectively. Both end portions of the secondary air supply pipe 117 are provided respectively with radially enlarged portions 117a and 117b for clamping the O-rings 118 and 119 between them and the head cover 42 and the cylinder head 41.

Meanwhile, the engine main body 38 is mounted on the motorcycle in such a posture that the secondary air supply pipe 117 fronts on the front side in the running direction of the motorcycle and that the reed valve 105 and the first passage portion 107a provided in the head cover 42 so as to achieve connection between the reed valve 105 and the secondary air supply pipe 117 front on the front side in the running direction of the motorcycle. To ensure that running airflows impinge effectively on the secondary air supply pipe 117, in this embodiment, the engine main body 38 is mounted on the vehicle body frame 15 under the condition where the secondary air supply pipe 117 is disposed on the lower side of a front portion of the engine main body 38.

Meanwhile, as shown in Figs. 4 and 5, a pump case 124 of an oil pump 123 for pumping up an oil from a lower portion inside the crankcase 39 is connected to the crankcase 39 in the vicinity of the ball bearing 48, and a driving gear 127 provided as one body with the driving sprocket 78 of the timing transmission mechanism 77 is meshed with a driven gear 126 provided as one body with an input shaft 125 of the oil pump 123. Namely, the oil pump 123 is operated as a pump in accordance with the rotation of the crankshaft 37.

An oil passage 129 extending from the crankcase 39 through the cylinder block 40 and the cylinder head 41 to the head cover 42 is communicated with a discharge port 128 of the oil pump 123, and passages 130 and 131 communicated with the oil passage 129 are provided in the cylinder head 41 and the rocker shaft 69, for lubricating the portions between the rocker shaft 69 and the intake-side and exhaust-side rocker arms 70 and 71. In addition, the head cover 42 is provided with a plurality of oil jet holes 132 · · · for jetting the oil toward sliding contact portions between the intake-side and exhaust-side cams 72 and 73 and the cam slippers 70a and 71a of the intake-side and exhaust-side rocker arms 70 and 71, in such a manner that the oil jet holes 132 · · · are communicated with the downstream end of the oil passage 129.

In addition, a temperature sensor 133 for detecting the temperature of the oil as a temperature representative of the engine temperature is attached to the head cover 42 so as to front on the downstream portion of the oil passage 129, and an oil supply cap 134 for supplying the oil into the crankcase 39 is detachably arranged on the cylinder block 40 on the rear side of the first cover member 88.

Referring to Fig. 10 as well, the transmission T comprises a V-belt type automatic transmission 135 for automatic non-stage speed change of the power outputted from the crankshaft 37, and a speed reduction gear train 136 provided between the V-belt type automatic transmission 135 and the axle 137 of the rear wheel WR.

A case 138 of the transmission T is comprised of a case main body 139 connected to the crankcase 39 and the cylinder block 40 on the left side as viewed along the running direction of the motorcycle and extending to the left side of the rear wheel WR, a left side case 140 connected to the case main body 139 so as to cover the left side of the case main body 139, and a right side case 141 connected to the case main body 139 so as to cover the right side of a rear portion of the case main body 139. A first transmission chamber 142 is formed between the case main body 139 and the left side case 140, and a second transmission chamber 143 is formed between a rear portion of the case main body 139 and the right side case 141. Moreover, a tubular bearing housing 144 for rotatably supporting the input shaft 125 of the oil pump 123 in cooperation with the pump case 124 is provided as one body with the case main body 139, and a driven gear 126 provided on the input shaft 125 is clamped between the pump case 124 and the bearing housing 144.

The V-belt type automatic transmission 135 is contained in the first transmission chamber 142, and comprises a drive pulley 145 attached to the other end portion of the crankshaft 37, a driven pulley shaft 146 having its axis parallel to the crankshaft 37 and rotatably borne on the case main body 139 and the right side case 141, a driven pulley 147 mounted on the driven pulley shaft 146, and an endless V-belt 148 wrapped around the drive pulley 145 and the driven pulley 147.

The drive pulley 145 is comprised of a fixed pulley half 149 fixed to the other end portion of the crankshaft 37, a movable pulley half 150 slidably borne on the crankshaft 37 so as to be capable of approaching and moving away from the fixed pulley half 149, and a centrifugal mechanism 151 for generating a force for pressing the movable pulley half 150 toward the side of the fixed pulley half 149 according to an increase in the rotational frequency of the crankshaft 37.

The driven pulley shaft 146 is rotatably borne on the right side case 141 and the case main body 139 through ball bearings 152 and 153. The driven pulley 147 is comprised of a fixed pulley half 154 which is relatively rotatably borne on the driven pulley shaft 146, with its position in the axial direction fixed, and a movable pulley half 155 which is slidably and relatively rotatably borne on the fixed pulley half 154 so as to be capable of approaching and moving away from the fixed pulley half 154 and is spring-biased toward the side of the fixed pulley half 154.

Moreover, a centrifugal clutch 156 for connecting the fixed pulley half 154 and the driven pulley shaft 146 to each other according to an increase in the rotational frequency of the fixed pulley half 154 is provided between the fixed pulley half 154 and the driven pulley shaft 146.

The speed reduction gear train 136 is contained in the second transmission chamber 143, and is comprised of an intermediate shaft 159 having both end portions thereof rotatably borne on the right side case 141 and the case main body 139, a first gear 160 provided on the driven pulley shaft 146, a second gear 161 provided on the intermediate shaft 159 and meshed with the first gear 160, a third gear 162 provided on the intermediate shaft 159, and a fourth gear 163 meshed with the third gear 162. A first unidirectional clutch 164 is interposed between the axle 137 of the rear wheel WR and the fourth gear 163.

Meanwhile, an axle support member 165 extending to the right side of the rear wheel WR is fastened to a right side wall of the crankcase 39 as viewed from a person directed to the front side in the running direction of the motorcycle, and the axle 137 of the rear wheel WR is rotatably borne on a support tube portion 166 provided at a rear portion of the axle support member 165, the right side case 141 of the case 138 of the transmission T, and the case main body 139 of the case 138. Namely, the axle 137 rotatably penetrates through the support tube portion 166 and the right side case 141 to project into the second transmission chamber 143, a ball bearing 167 is interposed between the support tube portion 166 and the axle 137, a ball bearing 168 is interposed between the right side case 141 and the axle 137, and a ball bearing 157 is interposed between the case main body 139 and the axle 137.

In addition, a driven sprocket 170 is attached to a projected end portion of the axle 137 projected from the support tube portion 166 to the outside, through a second unidirectional clutch 169.

In Fig. 11, a left-right pair of frame-side brackets 171, 171 extending downwards are fixed to a rear portion of the main frame 17 of the vehicle body frame 15, both end portions of a pedal shaft 173 having an axis parallel to the axle 137 of the rear wheel WR and penetrating through a support tube 172 provided between both of the frame-side brackets 171, 171 are rotatably borne on the support tube 172 through ball bearings 174, 174, and the crank pedals 34 · · · are fixed respectively to both ends of the pedal shaft 173 projecting from the support tube 172.

A driving sprocket 175 is fixed to the pedal shaft 173 between the right-side crank pedal 34 and the support tube 172. In addition, a support arm 176 borne on the axle support member 165 so as to be turning about an axis parallel to the axle 137 is disposed on the lower side of the axle 137, and a pair of sprockets 177 and 178 are rotatably borne on the support arm 176. An endless chain 179 is wrapped around the driving sprocket 175, the driven sprocket 170 on the side of the axle 137, and both of the sprockets 177 and 178, and the support arm 176 is spring-biased to the side for applying a tension to the chain 179. Besides, a chain cover 180 for covering the chain 179 from the outside is supported on the vehicle body frame 15.

Namely, the power from the engine E can be transmitted to the axle 137 of the rear wheel WR through the transmission T, and the power generated by stepping on the crank pedals 34 can also be transmitted to the axle 137 of the rear wheel WR. Of the power from the engine E and the power from the crank pedals 34 · · · , the power with a higher rotational frequency is transmitted to the axle 137 by the functions of the first and second unidirectional clutches 164 and 169. It should be noted here that when the load necessary for rotating the rear wheel WR is increased, at the time of ascending a slope or in other similar situations, both of the power from the engine E and the power from the crank pedals 34 · · · can be transmitted to the axle 137.

Meanwhile, a rear wheel brake BR is a drum brake comprising a brake drum 182 fixed to an axle tube 181 relatively non-rotatably connected to the axle 137, and the rear wheel WR is comprised of a hub 183 fixed to the brake drum 182, a rim 184 coaxially surrounding the hub 183, a tire 185 mounted on the rim 184, and a plurality of wire spokes 186 · · · provided between the hub 183 and the rim 184.

The hub 183 is comprised of a cylinder portion 183a attached to the outer circumference of the brake drum 182 by welding, and a pair of flanges 183b, 183b provided integrally with both ends of the cylinder portion 183, and both the flanges 183b, 183b are provided respectively with a plurality of connection holes 187 · · · for engagement and connection of the inside ends of the wire spokes 186 · · · .

With the hub 183 thus integrally provided with the pair of flanges 183b, 183b for connection of the plurality of wire spokes 186 · · · , it is possible to solve the problem of rusting due to penetration of water to joint surfaces of a plurality of members, as contrasted to the case where the hub is composed of a plurality of members. Moreover, since the hub 183 is integrally formed, it suffices for a welding jig at the time of welding both of the flanges 183b, 183b to the brake drum 182 to be positioned relative to the hub 183, so that the number of working steps is reduced. Moreover, with the hub 183 integrally formed, it is possible to easily secure the position accuracy of the connection holes 187 · · · provided in both of the flanges 183b, 183b by setting them opposite to each other in the axial direction of the axle 137. Besides, the front wheel WF is also constituted in the same manner as the rear wheel WR.

A front portion of the power unit P is vertically oscillatably borne on the vehicle body frame 15 through a vibration-proofing link 188. The vibration-proofing link 188 comprises a left-right pair of engine-side brackets 189, 189 provided at front lower portions of the case main body 139 in the power unit P at positions offset to the left side from the center line BC of the vehicle body, the left-right pair of frame-side brackets 171, 171 attached to the main frame 17 of the vehicle body frame 15, a cylindrical turning tube 190 disposed between both of the engine-side brackets 189, 189, a connection shaft 191 provided between both of the engine-side brackets 189, 189 so as to turnably bear the turning tube 190, a link member 192 formed in a tubular shape with a rectangular cross section and having one end thereof attached to the turning tube 190, a cylindrical outer tube 193 which is disposed between both of the frame-side brackets 171, 171 and to which the other end of the link member 192 is attached, a cylindrical inner tube 194 coaxially disposed in the outer tube 193, rubber bushes 196 · · · whose inner circumferences are burned respectively onto both end portions of the inner tube 194 and whose outer circumferences are respectively burned onto cylindrical cases 195 pressed into both end portions of the outer tube 193, an oscillational support shaft 197 provided between both the frame-side brackets 171, 171 so as to turnably bear the inner tube 194, an arm 198 attached to an intermediate portion in the axial direction of the outer tube 193 and extending forwards, and a stopper rubber 199 fitted in the tip end of the arm 198.

The stopper rubber 199 is inserted in a tubular contacted body 200 attached to the support tube 172 provided between both of the frame-side brackets 171, 171, in such a manner that both upper and lower surfaces of the stopper rubber 199 make contact with upper and lower inside surfaces of the contacted body 200. Moreover, the contacted body 200 and the stopper rubber 199 are disposed at positions offset further to the left side from the center line BC of the vehicle body than the engine-side brackets 189, 189 and the link member 192.

In such a vibration-proofing link 188 as above, the load exerted on the oscillational support shaft 197 from the engine E of the power unit P is absorbed by elastic deformation of the rubber bushes 196 · · · and is also absorbed by elastic deformation of the stopper rubber 199 under pressing by the upper and lower inside surfaces of the contacted body 200. Moreover, with the stopper rubber 199 making contact with the upper and lower inside surfaces of the contacted body 200, the vertical oscillation range of the power unit P is restricted.

Referring to Fig. 12 as well, an upper portion of the power unit P and the vehicle body frame 15 are connected to each other through a non-expandable support member 201 so that the power unit P can be oscillated vertically. Moreover, in this first embodiment, a bracket 202 is provided at a front upper portion of the case main body 139 in the power unit P at a position offset to the left side from the vehicle body center line BC, and a bracket 203 is provided between the support stay 28 and the left-side reinforcing member 29 in the vehicle body frame 15 at a position offset to the left side from the vehicle body center line BC.

The upper end of the support member 201 formed in a solid cylindrical shape is turnably connected to a bracket 203 on the side of the vehicle body frame 15 through a rubber bush 204 and a connection shaft 205 having an axis parallel to the oscillational support shaft 197 of the vibration-proofing link 188, and the lower end of the support member 201 is turnably connected to a bracket 202 on the side of the power unit P through a rubber bush 206 and a connection shaft 207 parallel to the connection shaft 205.

Moreover, both of the brackets 202 and 203 are provided respectively on the power unit O and the vehicle body frame 15 so that the brackets 202 and 203 are connected to each other through the support member 201 on the front side of the rear wheel WR.

Next, functions of the present embodiment will be described. In the engine E, the cam shaft 68 is disposed closer to the combustion chamber 55 than the points of conjunction and connection between the intake and exhaust valves 58 and 59 and the intake-side and exhaust-side rocker arms 70 and 71, and the intake and exhaust valves 58 and 59 are disposed in the cylinder head 41, with their opening/closing operation directions parallel to each other. Therefore, with a structure in which the points of conjunction and connection between the intake and exhaust valves 58 and 59 with their opening/closing operation directions parallel to each other and the intake-side and exhaust-side rocker arms 70 and 71 are arranged to be close to each other, it is possible to reduce the width of the cylinder head 41.

In addition, the intake port 56, which is one of the intake and exhaust ports 56 and 57, is provided in the cylinder head 41 at a position spaced from one end in the axial direction of the cam shaft 68 in such a manner that at least a part of the cam shaft 68 is overlapped on a projection onto a plane orthogonal to the axis of the cam shaft 68. Therefore, the cam shaft 68 can be disposed further closer to the side of the combustion chamber 55, whereby the size of the cylinder head 41 can be further reduced in the direction along the cylinder axis C.

In addition, the intake port 56 is provided in the cylinder head 41 so that it intersects with the rocker shaft 69 on a projection onto a plane orthogonal to the cylinder axis C. It is possible to reduce the size of the cylinder head 41 in the direction along the axis of the rocker shaft 69.

Moreover, since the opening ends of the intake port 56 and the exhaust port 57 into the combustion chamber 55 are disposed on a straight line parallel to the axis of the cam shaft 68, it is possible to generate a swirl in the combustion chamber 55 and thereby to enhance combustion efficiency.

Furthermore, since the spark plug 76 having an axis at an acute angle α to the plane P1 containing the axes of the intake valve 58 and the exhaust valve 59 in common is attached to the cylinder head 41, it is possible to obviate the arrangement of component parts relating to the intake valve 58 and the exhaust valve 59 in the surroundings of the spark plug 76, to secure a sufficient vacant space, thereby permitting easy collision of cooling airflows on the spark plug 76, and to achieve efficient cooling of the spark plug 76.

Meanwhile, the first assembly opening portion 87 corresponding to the cam shaft 68 and the second assembly opening portion 98 corresponding to the rocker shaft 69 are mutually independently provided at one side wall of the cylinder head 41, the second cover member 99 for closing the second assembly opening portion 98 is fitted in the second assembly opening portion 98 so as to be inhibited from moving inwards in the axial direction, and the first cover member 88 is fixed to the cylinder head 41, for example by screwing, so as to be engaged with the outside surface of the second cover member 99.

Therefore, a space for attaching the second cover member 99 to the cylinder head 41 is not required to be secured in the surroundings of the second assembly opening portion 98, and it is possible to contribute to a reduction in the size of the cylinder head 41 by setting small the distance between the axes of the cam shaft 68 and the rocker shaft 69. Moreover, boring of the first support recessed portion 82 and the first support hole 83 for assembling the cam shaft 68 and boring of the second support recessed portion 95 and the second support hole 96 for assembling the rocker shaft 69 can be performed in the same direction from one side of the cylinder head 41, whereby complicated working can be unnecessitated, the processing accuracy can be enhanced sufficiently, and the number of processing steps can be reduced.

Besides, the secondary air supply passage 107 for supplying secondary air to the exhaust port 57 is connected to the reed valve 105 provided in the head cover 42 of the engine main body 38, and a part of the secondary air supply passage 107 is composed of the secondary air supply pipe 117 which has both ends thereof connected to the engine main body 38 in such a manner as to have its outside surface exposed to the atmospheric air.

Therefore, by air-cooling the secondary air supply pipe 117, it is possible to restrain heat from being transmitted to the side of the reed valve 105. Accordingly, by providing the reed valve 105 in the head cover 42, it is possible to reduce bad thermal influences on the reed valve 105, notwithstanding the engine E is of the air-cooled type, while setting short the secondary air supply passage 107 between the reed valve 105 and the exhaust port 57.

Moreover, since both ends of the secondary air supply pipe 117 are clamped between the cylinder head 41 and the head cover 42 which are connected to each other, connection component parts for bands, clips or the like for connecting the secondary air supply pipe 117 to the engine main body 38 are unnecessitated, so that it is possible to contrive reductions in the number of component parts and the number of assembling steps, and thereby to reduce cost. Besides, it is possible to eliminate the need for taking into account a space for laying out the connection component parts, and thereby to increase the degree of freedom in designing.

In addition, the O-rings 118 and 119 are interposed respectively between both end outside surfaces of the secondary air supply pipe 117 and the head cover 42 and the cylinder head 41, so that the sealing property at the portions of connection of both ends of the secondary air supply pipe 117 to the head cover 42 and the cylinder head 41 can be enhanced by utilizing the springy forces of the O-rings 118 and 119, while making it unnecessary to enhance the processing accuracy of both ends of the secondary air supply pipe 117. Thus, it is possible to reduce the number of processing steps, thereby to reduce cost, and to facilitate the assembling work as compared with the case of using connection component parts such as bands and clips.

Moreover, since the engine main body 38 is mounted on the motorcycle in such a posture that the secondary air supply pipe 117 fronts on the front side in the running direction, the secondary air supply pipe 117 can be cooled further effectively by running airflows at the time of running of the motorcycle.

Besides, since the engine main body 38 is mounted on the motorcycle in such a posture that the reed valve 105 fronts on the front side in the running direction of the motorcycle and that the first passage portion 107a provided in the head cover 42 for connection between the reed valve 105 and the secondary air supply pipe 117 fronts on the front side in the running direction of the motorcycle, it is possible to further reduce bad thermal influences on the reed valve 105.

Furthermore, a front portion of the power unit P comprising the engine E and the transmission T for transmitting the output of the engine E to the rear wheel WR through speed change is vertically oscillatably borne on the vehicle body frame 15 through the vibration-proofing link 188, the vibration-proofing link 188 is provided with the stopper rubber 199 for restricting the vertical oscillation range of the power unit P by making springy contact with the contacted body 200 provided in the vehicle body frame 15, and the non-expandable support member 201 for connecting the power unit P and the vehicle body frame 15 to each other while permitting vertical oscillation of the power unit P is provided between an upper portion of the power unit P and the vehicle body frame 15.

Therefore, by supporting the power unit P on the vehicle body frame 15 through the non-expandable support member 201 in place of the conventional rear cushion, it is possible to achieve reductions in size, weight and cost. Moreover, the vertical oscillation range of the power unit P is determined by the deflection amount of the stopper rubber 199 making springy contact with the contacted body 200 on the side of the vehicle body frame 15, so that it is possible to restrict the vertical oscillation range of the power unit P to within a comparatively narrow range, to thereby enhance space efficiency, to facilitate designing in laying out the fittings both on the side of the vehicle body frame 15 and on the side of the power unit P, and to increase the degree of freedom in designing inclusive of design planning.

In addition, since an upper portion of the power unit P on the front side of the rear wheel WR and a rear portion of the vehicle body frame 15 are connected to each other by the support member 201, it is possible to shorten the support member 201 and to contrive further reductions in weight and cost. Moreover, since one end of the support member 201 is connected to the bracket 203 which is provided between the support stay 28 having both ends thereof attached to the seat post 18 and one of the reinforcing members 29 · · · extending rearwardly upwards from the seat post 18 so as to connect both left and right sides of the support stay 28 to the seat post 18, it is possible to firmly support the power unit P with a simple structure.

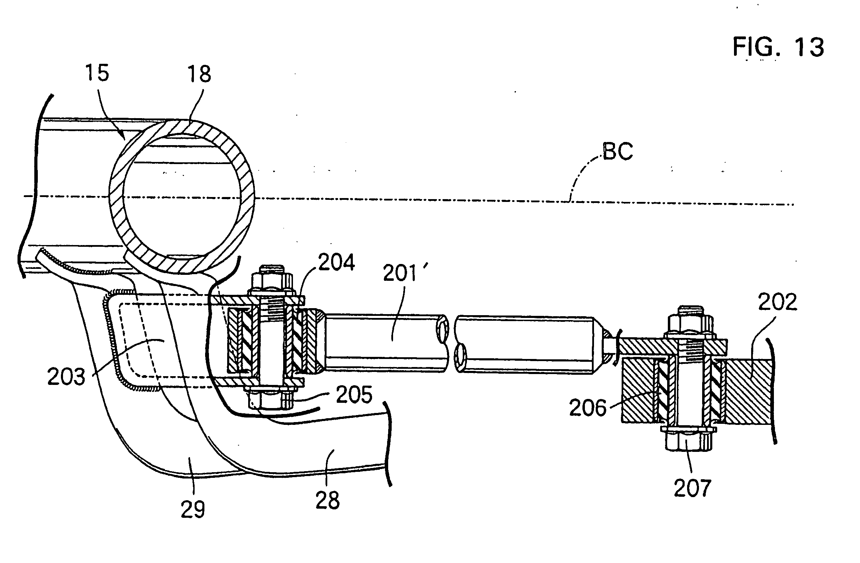

As a second embodiment of the present invention, as shown in Fig. 13, the support member 201' may be formed in a hollow tubular shape. With this constitution, it is possible to contrive further reductions in the weight and cost of the structure for supporting the power unit P on the vehicle body frame 15.

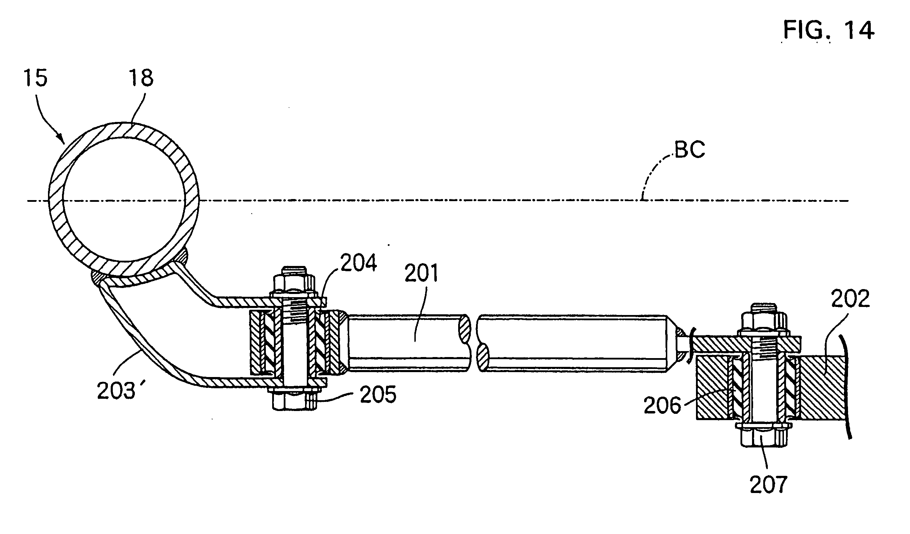

Furthermore, as a third embodiment of the present invention, as shown in Fig. 14, the support member 201 or 201' may be connected to a bracket 203' attached to the seat post 18. With this constitution, also, it is possible to firmly support the power unit P with a simple structure.

While the embodiments of the present invention have been described above, the present invention is not limited to the above embodiments, and various design modifications are possible without departing from the present invention as set forth in the claims.

As has been described above, according to the invention as set forth in claim 1, it is possible to support the power unit on the vehicle body frame while making it possible to achieve reductions in size, weight and cost, to restrict the vertical oscillation range of the power unit to within a comparatively narrow range, thereby to enhance space efficiency, to facilitate designing in laying out the fittings both on the side of the vehicle body frame and on the side of the power unit, and to increase the degree of freedom in designing inclusive of design planning.

According to the invention as set forth in claim 2, it is possible to contrive further reductions in weight and cost.

Furthermore, according to the inventions as set forth in claims 3 and 4, it is possible to firmly support the power unit with a simple structure.

## Claims

1. A motorcycle having a power unit (P) comprising an engine (E) that is fixedly connected for simultaneous swinging motion to a transmission (T) for transmitting the output of said engine (E) through speed change to a rear wheel (WR), an axle of which is shaft-supported on a rear portion of said power unit (P), wherein said power unit (P) including said rear wheel (WR) is supported on a vehicle body frame (15) by means of a power unit support structure so as to be vertically swingable, wherein said power unit support structure comprises a vibration-proofing link (188) for connecting a front portion of said power unit (P) to said vehicle body frame (15) in a vertically oscillatable condition, which vibration-proofing link (188) is provided with an elastic member (199) for restricting the vertical oscillation range of said power unit (P) by making springy contact with a contacted body (200) provided in said vehicle body frame (15), and a non-expandable support member (201, 201') for connecting said power unit (P) and said vehicle body frame (15) to each other while permitting vertical oscillation of said power unit (P), which non-expandable support member (201, 201') is provided between an upper portion of said power unit (P) on the front side of said rear wheel (WR) and a seat post (18) of said vehicle body frame (15),
**characterized in that**
said vibration-proofing link (188) is provided between a pair of engine-side brackets (189, 189) and a pair of frame-side brackets (171, 171) and that said non-expandable support member (201) is provided on only one side of the power unit (P) offset from a center line (BC) of the vehicle body frame (15) and crosses a carburetor-air cleaner construction disposed on an upper side of said power unit (P).

2. A motorcycle as set forth in claim 1, wherein said support member (201') is formed to be hollow.

3. A motorcycle as set forth in any of claims 1 to 2, wherein said vehicle body frame (15) comprises a main frame (17) provided at its front end with a head pipe (16) for steerably supporting a front fork (19) and a steering handle (20), a seat post (18) integrally provided in connection with a rear portion of said main frame (17) so as to support a seat (26) for seating the driver thereon, a support stay (28) formed in a roughly U shape opened to the front side so as to support a fuel tank (30) and having both ends thereof fixed to said seat post (18), and a reinforcing member (29) extending rearwardly upwards from said seat post (18) so as to respectively connect both left and right sides of said support stay (28) and said seat post (18) to each other, and one end of said support member (201, 201') is connected to a bracket (203) provided between said support stay (28) and said reinforcing member (29).

4. A motorcycle as set forth in any of claims 1 or 2, wherein said vehicle body frame (15) comprises a main frame (17) provided at its front end with a head pipe (16) for steerably supporting a front fork (19) and a steering handle (20), and a seat post (18) integrally provided in connection with a rear portion of said main frame (17) so as to support a seat (26) for seating the driver thereon, and said support member (201, 201') is provided between an upper portion of said power unit (P) and said seat post (18).

## Patentansprüche

1. Kraftrad mit einer Antriebseinheit (P), welche einen Motor (E) umfasst, der mit einem Getriebe (T) zur gleichzeitigen Schwenkbewegung fest verbunden ist, um die Ausgangsleistung des Motors (E) durch eine Drehzahländerung zu einem Hinterrad (WR) zu übertragen, wobei eine Achse desselben an einem hinteren Abschnitt der Antriebseinheit durch eine Welle gelagert ist, wobei die Antriebseinheit (P) einschließlich des Hinterrads (WR) an einem Fahrzeugrumpfrahmen (15) mittels einer Antriebseinheit-Tragstruktur derart abgestützt ist, dass sie vertikal schwenkbar ist, wobei die Antriebseinheit-Tragstruktur eine schwingungsfeste Verbindung (188) umfasst, um einen vorderen Abschnitt der Antriebseinheit (P) mit dem Fahrzeugrumpfrahmen (15) in einem vertikal oszillierbaren Zustand zu verbinden, welche schwingungsfeste Verbindung (188) mit einem elastischen Element (199) versehen ist, um den vertikalen Oszillationsbereich der Antriebseinheit (P) zu begrenzen, indem es einen federnden Kontakt mit einem in dem Fahrzeugrumpfrahmen (15) vorgesehenen Kontaktkörper (200) herstellt, und ein nicht-verlängerbares Tragelement (201, 201') umfasst, um die Antriebseinheit (P) und den Fahrzeugrumpfrahmen (15) miteinander zu verbinden, während es eine vertikale Oszillation der Antriebseinheit (P) erlaubt, welches nicht-verlängerbare Tragelement (201, 201') zwischen einem oberen Abschnitt der Antriebseinheit (P) auf der Vorderseite des Hinterrads (WR) und einer Sattelstütze (18) des Fahrzeugrumpfrahmens (15) vorgesehen ist,
**dadurch gekennzeichnet,**
**dass** die schwingungsfeste Verbindung (188) zwischen einem Paar von motorseitigen Halterungen (189, 189) und einem Paar von rahmenseitigen Halterungen (171, 171) vorgesehen ist und dass das nicht-verlängerbare Tragelement (201) nur auf einer Seite der Antriebseinheit (P) versetzt von einer Mittellinie (BC) des Fahrzeugrumpfrahmens (15) vorgesehen ist und einen an einer oberen Seite der Antriebseinheit (P) vorgesehenen Vergaser-Luftfilter-Aufbau kreuzt.

2. Kraftrad nach Anspruch 1, wobei das Tragelement (201') hohl ausgebildet ist.

3. Kraftrad nach Anspruch 1 oder 2, wobei der Fahrzeugrumpfrahmen (15) umfasst: einen Hauptrahmen (17), welcher an seinem vorderen Ende mit einem Kopfrohr (16) zum lenkbaren Abstützen einer Vorderradgabel (19) und eines Lenkers (20) versehen ist, eine Sattelstütze (18), welche integral mit einem hinteren Abschnitt des Hauptrahmens (17) zum Abstützen eines Sitzes (26) verbunden ist, um einen Fahrer darauf zu setzen, eine Tragstütze (28), welche in einer zur Vorderseite hin offenen annähernden U-Form ausgebildet ist, um einen Kraftstofftank (30) abzustützen, und deren beide Enden an der Sattelstütze (18) befestigt sind, und ein Verstärkungselement (29), welches sich von der Sattelstütze (18) nach hinten und nach oben erstreckt, um jeweils die linken und rechten Seiten der Tragstütze (28) und der Sattelstütze (18) miteinander zu verbinden, und wobei ein Ende des Tragelements (201, 201') mit einer zwischen der Tragstütze (28) und dem Verstärkungselement (29) vorgesehenen Halterung (203) verbunden ist.

4. Kraftrad nach einem der Ansprüche 1 oder 2, wobei der Fahrzeugrumpfrahmen (15) umfasst: einen Hauptrahmen (17), welcher an seinem vorderen Ende mit einem Kopfrohr (16) zum lenkbaren Abstützen einer Vorderradgabel (19) und eines Lenkers (20) versehen ist, und eine Sattelstütze (18), welche integral mit einem hinteren Abschnitt des Hauptrahmens (17) zum Abstützen eines Sitzes (26) verbunden ist, um einen Fahrer darauf zu setzen, und wobei das Tragelement (201, 201') zwischen einem oberen Abschnitt der Antriebseinheit (P) und der Sattelstütze (18) vorgesehenen ist.

## Revendications

1. Un motocycle ayant une unité motrice (P) comprenant un moteur thermique (E) relié rigidement, pour un mouvement oscillant simultané, à une transmission (T), pour transmettre la puissance dudit moteur thermique (E) par l'intermédiaire d'un changement de vitesse, à une roue arrière (WR), dont un essieu est supporté par l'arbre sur une partie arrière de ladite unité motrice (P), dans lequel ladite unité motrice (P) comprenant ladite roue arrière (WR) est supportée sur un châssis de corps de véhicule (15), au moyen d'une structure de support d'unité motrice, pour pouvoir osciller verticalement, dans lequel une structure de support d'unité motrice comprenant une bielle antivibration (188), pour relier une partie avant de ladite unité motrice (P) audit châssis de corps de véhicule (15) en un état permettant une oscillation verticale, ladite bielle antivibration (188) étant munie d'un organe (199) élastique pour limiter la plage d'oscillation verticale de ladite unité motrice (P) en établissant un contact élastique avec un corps de mise en contact (200) prévu dans ledit châssis de corps de véhicule (15), et un organe de support (201, 201') non extensible, pour relier ladite unité motrice (P) et ledit châssis de corps de véhicule (15) à chaque autre, tout en permettant une oscillation verticale de ladite unité motrice (P), ledit organe de support (201, 201') non extensible étant prévu entre une partie supérieure de ladite unité motrice (P) sur le côté avant de ladite roue arrière (WR) et un pilier de selle (18) sur ledit châssis de corps de véhicule (15),
**caractérisé en ce que**
ladite liaison antivibration (188) est prévue entre une paire de supports (189, 189), situés côté moteur thermique, et une paire de supports (171, 171), situés côté châssis, et **en ce que** ledit organe de support (201) non extensible est prévu uniquement sur un côté de l'unité motrice (P), en décalage par rapport à un axe central (BC) du châssis de corps de véhicule (15), et croise une construction carburateur-filtre à air, disposée sur un côté supérieur de ladite unité motrice (P).

2. Un motocycle tel qu'indiqué à la revendication 1, dans lequel ledit organe de support (201') est creux.

3. Un motocycle tel qu'indiqué à l'une quelconque des revendications 1 à 2, dans lequel ledit châssis de corps de véhicule (15) comprend un châssis principal (17) muni, à son extrémité avant, d'un tube de tête (16) pour supporter, avec une possibilité directionnelle, une fourche avant (19) et un guidon (20), un pilier de selle (18) prévu solidairement en liaison avec une partie arrière dudit châssis principal (17) pour supporter une selle (26) sur laquelle le conducteur est assis, un étai de support (28) formé grossièrement en forme de U, ouvert sur le côté avant, pour supporter un réservoir de carburant (30) et ayant ses deux extrémités fixées sur ledit pilier de selle (18), et un organe de renforcement (29) s'étendant vers l'arrière et le haut depuis ledit pilier de selle (18), pour respectivement relier l'un à l'autre les deux côtés gauche et droit dudit étai de support (28) et dudit pilier de selle (18), et une extrémité dudit organe de support (201, 201') est connectée à un support (203) prévu entre ledit étai de support (28) et ledit organe de renforcement (29).

4. Un motocycle tel qu'indiqué à l'une quelconque des revendications 1 ou 2, dans lequel ledit châssis de corps de véhicule (15) comprend un châssis principal (17) muni à son extrémité avant d'un tube de tête (16) pour supporter, avec une possibilité de les diriger, une fourche avant (19) et un guidon (20), et un pilier de selle (18), prévu solidairement en liaison avec une partie arrière dudit châssis principal (17), pour supporter une selle (26) sur laquelle le conducteur s'assied, et ledit organe de support (201, 201') est prévu entre une partie supérieure de ladite unité motrice (P) et ledit pilier pour selle (18).
